# EUROPEAN PATENT APPLICATION

(11) **EP 1 579 768 A1**
(43) Date of publication of application: **28.09.2005**
(21) Application number: 04106800.8
(22) Date of filing: 21.12.2004
(51) Int. Cl.: A23B 7/154, A01N 43/90, A01N 37/06, C07D 473/00

(54) **6-benzyladenine based composition for improving the quali-quantitative appearance of actinidia fruits, use and method of application thereof**

(30) Priority: 23.03.2004 IT MI20040553
(71) Applicant: AGRIMPORT S.P.A., 39100 BOLZANO (IT)
(72) Inventor: Miglio, Giovanni, Malalbergo Frazione Altedo (Bologna) (IT)
(74) Representative: Ponzellini, Gianmarco

(57) **Abstract**

The present invention relates to the use of 6-benzyladenine, as such or in combination with suitable adjuvants mainly of natural origin, as active substance to be applied onto fruits of plants of the actinidia genus for improving some of their qualitative, quantitative and product parameters.

## Description

The present invention relates to the use of 6-benzyladenine, as such or in combination with suitable adjuvants mainly of natural origin, as active substance to be applied onto fruits of plants of the actinidia genus so as to improve some of their qualitative, quantitative and product parameters.

It is well known in the framework of the agroindustrial chain about the need for goods with as high a quality as possible, meaning by quality among other things the optimization of various quali-quantitative parameters concerning fruit appearance, size and weight, their organoleptic properties, their stability to preservation, their resistance to parasites or environmental hardness and more. More to the point, in the case of actinidia fruits, whose scientific name is actinidia chinensis or actinidia deliciosa, also commonly known as kiwi, the most important quailquantitative parameters for producers and consumers are fruit weight and size, their shape, the absence of residual pesticides or other pollutants on fruits, good preservability and taste and flavor properties.

Leaving aside hardness due to parasites, in which case insecticides, fungicides and bactericides known under the incorrect name of "pesticides" are still frequently used, it is known in the agronomic field about the existence of so-called adjuvant substances, or having fertilizing properties, which can improve one or more of the aforesaid quali-quantitative parameters.

In the specific case of plants of the actinidia genus, a known substance, which is also the only one commonly used in some countries in order to increase fruit global production and size, is the so-called CPPU, also known as iso-di-forchlorfenuron, or under the IUPAC name 1-(2-chloro-4-pyridyl)-3-phenylyrea, with CAS no. 68157-60-8.

Said substance is a molecule of synthetic origin known for its ability to stimulate cell production and anyhow to increase volume and weight of fruits of several plants such as apple-tree, pear-tree, kaki, vine, blueberry, tomato, potato, pepper and melon (Schiaparelli, G.; Schreiber, G.; Bourlot, G.; *Fitoregolatori in agricoltura,* Edagricole 1995, 120-121).

However, the use of CPPU in agriculture is not free from drawbacks.

A first drawback consists in that said substance is at present not allowed in Europe, so that - but for an illicit use thereof - its use is allowed only in some countries in South America such as Chile or Ecuador.

A second known drawback consists in that due to a very high CPPU activity farmers should be extremely cautious because of its critical doses, above which fruits undergo deformation and serious phenomena involving pulp degradation.

A third known drawbacks consists in that, also at correct doses of use, CPPU gives easily rise to fruits with evident deformations or ribs due to an immoderate cell development in fruit medullary rays. Moreover, said fruits generally have little firmness and easily undergo degradation or rotting phenomena during preservation.

A fourth drawback consists in that consumers do not like fruits or goods treated with synthetic pesticides or plant hormones and much prefer fruits or goods treated, when necessary, with products of natural origin. Therefore, should also CPPU be legalized, it could not avoid this limit in any way.

It is known in agronomy about another product, i.e. 6-benzyladenine, or 6-benzylaminopurine, belonging to the class of purine bases. It is a natural compound with IUPAC name "N-benzyl-6-purinylamine" and CAS no. 1214-39-7.

In Europe said substance is officially listed among natural plant extracts (European Commission, document SANCO/361/2000 rev. 4, list C), and given the available knowledge thereon, it is regarded as a substance having a reduced toxicological and environmental impact.

Indeed, it is regularly authorized for use in agriculture, but until today its use has been limited to young plants kept in nurseries for stimulating the production of new gems, or to young apples for inducing a partial drop thereof, thus obtaining a cheap thinning as an alternative to an expensive manual thinning. Another preferred application of this product is leave spraying or root watering so as to improve and increase plant growth speed. As a matter of fact, formulations containing 6-benzyladenine in concentrated solution of alcohols and metal hydroxides have been described (US 5,455,220 and US 5,744,424) for regulating and promoting growth in a plant variety. Said formulations, further added with humic acid, sea weeds and, if necessary, with iron sulfate heptahydrate, have also been described as bio-stimulating substance for lawns. These formulations, however, are not described or suggested as possibly useful for improving the quality of fruit in general and of actinidia fruits in particular.

At present, 6-benzyladenine is not used for improving the quali-quantitative appearance of actinidia fruits. The technical problem faced by the present invention concerns the production of actinidia fruits with better quali-quantitative properties; at present, said problem has not yet been solved and involves basically the following aspects:
- a first unsatisfied requirement consists in the need for suitable compositions, which can also be used in Europe, to be applied onto plants and/or fruits of the actinidia genus;
- a second requirement consists in that said compositions should be of easy use and anyhow of non-critical dose, so as to simplify their practical use and to minimize risks resulting from an incorrect use;
- a third requirement consists in that said compositions should not cause any kind of deformations on fruits, but also improve their size and shape according to criteria requested by producers and by consumers, without jeopardizing fruit firmness, taste and preservability;
- a fourth requirement consists in achieving said aims by using one or more substances preferably of natural origin, or anyhow with a reduced toxicological impact on humans, since they are already known and used for instance in the food and/or drug field as additives for food compositions, cosmetics or similar products. If necessary, these substances can be suitably mixed with one another, thus preventing as much as possible the use of synthetic molecules.

These and other aims, as will be evident from the following detailed description and from the appended claims, have been achieved by the Applicant, who has found one or more groups of substances that, if applied at given moments onto plants of the actinidia genus, have shown a surprising and unexpected effect on fruit quali-quantitative parameters and namely on their weight, size, shape, quantity, organoleptic properties and preservability.

As a matter of fact, it has now been surprisingly found that 6-benzyladenine, as such or in combination with suitable substances of natural origin or with low toxicity, when applied onto fruitlets or unripe fruits of plants of the actinidia genus, behaves as an active substance for improving their quali-quantitative parameters as described above.

The fact that in the past 6-benzyladenine was not applied onto fruits with a thick and resistant epidermis, such as watermelons, pumpkins, actinidiae and others, was due to the fact that, as is known, said 6-benzyladenine cannot easily get through the thick epidermis of said fruits and therefore penetrate therein. As a consequence, most skilled technicians have always thought that 6-benzyladenine activity could unfold itself only on particularly soft and delicate vegetal tissues, such as for instances gems, new apples or grapes.

It has now been remarked that actinidia fruits treated with 6-benzyladenine, once they are ripe, are definitely bigger and with a much more regular shape than untreated fruits. Then, when placed in a fridge, said fruits treated with 6-benzyladenine show an excellent tendency to preservation, further keeping optimal organoleptic properties.

The Applicant has carried out a series of experimental tests in order to check and confirm on fruits of the genus actidinia the effectiveness both of 6-benzyladenine used alone and of compositions comprising 6-benzyladenine together with other substances of natural origin, or anyhow with a reduced toxicological impact, so as to monitor possible adjuvant and/or improving effects.

A first test has been executed by manually spraying a sample of 50 actinidia fruitlets by means of a wash bottle. An aqueous solution (concentrated mother liquor) containing originally 100 grams per liter of 6-benzyladenine (corresponding to 100,000 parts per million or ppm with respect to volume), added with small amounts of potassium hydroxide as stabilizer and ethoxylated sorbitan monolaurate as humectant, was prepared to this purpose. The above mother liquor was then diluted by adding it into the water contained in the wash bottles, in a ratio of 5 milliliters per liter (5:1,000=500 ppm); 1 milliliter per liter (1:1,000=100 ppm); 0.5 milliliters per liter (0.5:1,000=50 ppm), and eventually 0.1 milliliters per liter (0.1:1,000=10 ppm). Thus the concentration of 6-benzyladenine actually sprayed onto the plants was of 500, 100, 50 and 10 ppm with respect to the total volume of sprayed solution. A similar untreated sample has been sprayed in the same period only with pure water.

Said treatments were executed for three times:
- the first time ten days after flower petal drop, corresponding to the beginning of fruitlet formation;
- the second time ten days after the first;
- the third time ten days after the second.

Test results are shown in the following Table 1:

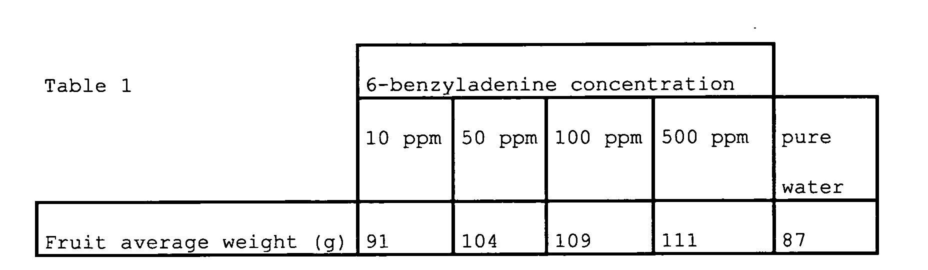

A second test has been carried out by adding to 6-benzyladenine a substance of wholly natural origin, which has been tested for its possible ability to increase the activity of 6-benzyladenine. A mineral know as leonardite has been chosen to this purpose. It is a natural substance taking its name from A. Leonard, who found it in North Dakota (USA) at the beginning of the 40s, which derives from slowly fossilized vegetal material through transformation in anaerobic environment, with an intermediate age between peat (relatively younger) and lignite (relatively older).

Said compound is rich in organic substances used to improve soil fertility, such as for instance fulvic acids. Leonardite was added in a weight ratio of 0.01 to 0.5 parts per part of 6-benzyladenine. The latter was sprayed onto the plants at a fixed concentration of 100 ppm, corresponding to the solution obtained by diluting in a liter of water a milliliter of mother liquor as used in the previous test, according to an application scheme similar to said test. Test results, evaluated on a sample of 20 ripe fruits for each group, are shown in the following Table 2:

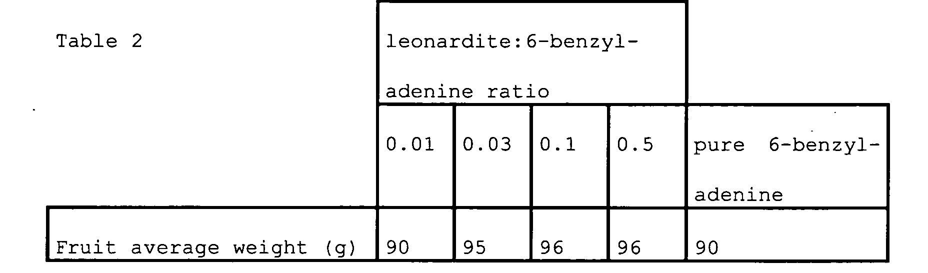

The same test was carried out under the same conditions by associating fulvic acids and humic acids with 6-benzyladenine. The results were basically similar to those achieved with the previous association 6-benzyladenine/leonardite.

A third test has been executed by associating with 6-benzyladenine a low toxicity compound having surfactant or tackifying properties, or at the same time surfactant and tackifying properties, so as to check if it could promote for instance penetration of 6-benzyladenine into fruits and therefore its effectiveness. Ethoxylated sorbitan monolaurate (for simplicity's sake referred to in the following tables as "sml"), which is regarded as widely representative of a series of other surfactant and/or surfactant-tackifying compounds used in agriculture, has been chosen for this test. As in the previous test, ethoxylated sorbitan monolaurate was added in a weight ratio of 0.1 to 50 parts per part of 6-benzyladenine. The latter was used at a fixed dose of 100 ppm, using 1 milliliter of the mother composition already used previously diluted in a liter of aqueous solution, which is sprayed through wash bottles according to an application scheme similar to previous tests. Test results, evaluated on a sample of 20 ripe fruits for each group, are shown in the following Table 3:

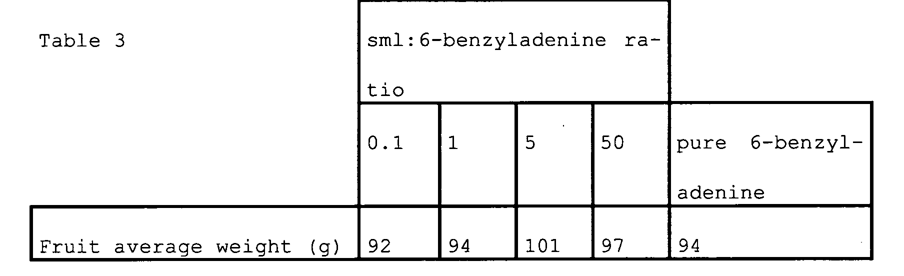

The same test was used also for examining final shape of treated fruits. As a matter of fact, it is known that consumers do not like fruits with an under-oval shape, whereas they like as much as possible "squared" fruits, whose diameter is as much as possible the same as their length, or anyhow new shapes with respect to the traditional elliptical shape of fruits. To this purpose a "lengthening index" was developed, which is nothing but the ratio of fruit length, from apex to base, to their average diameter. Therefore, the more this index is near 1, the more fruits are "squared".

Examination results, made on a sample of 20 ripe fruits, are shown in the following Table 4:

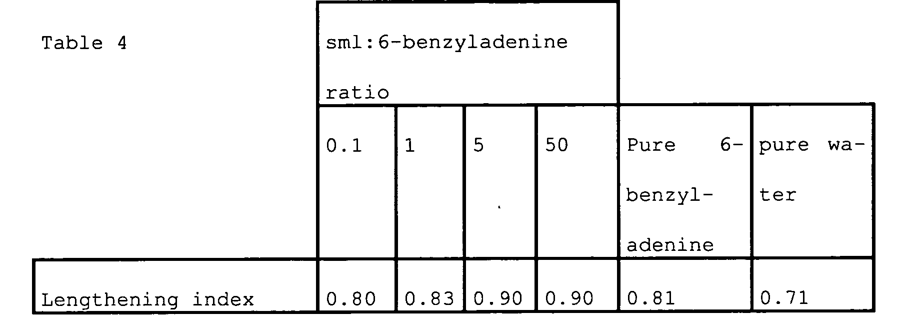

Results such as those achieved using ethoxylated sorbitan monolaurate were achieved using equivalent formulations in which 6-benzyladenine was associated with other surfactant and/or surfactant-tackifiers of natural origin.

Among these, particularly preferred were surfactants such as for instance fatty amine ethoxylate having the following structural formula:

R-CH₂-N-[CH₂-CH₂-OH]₂

or ethoxylated fatty acids or ethoxylated fatty alcohols.

Other preferred substances were surfactants-tackifiers such as those based on pine essential oils, pinolene for instance; those based on mineral oils obtained by oil fractioned distillation; those based on vegetable oils, for instance olive oil, corn oil, cotton oil soybean oil, grape seed oil, seed oil such as sunflower seed oil, peanut oil, azadiractin oil; edible oils and fats of animal origin; soy lecithin.

From the above description it can be inferred that 6-benzyladenine, if applied at suitable times and with suitable doses onto fruitlets and/or unripe young fruits of the actinidia genus, can increase size and weight of ripe fruits and change positively their form, without jeopardizing their firmness and other quali-quantitative parameters.

The addition of natural substances such as leonardite, and/or its active components, or similar compounds, or of low toxicity natural compounds with surfactant and/or surfactant-tackifying properties, such as ethoxylated sorbitan monolaurate and/or the others as mentioned above, increases the activity of 6-benzyladenine to a significant extent.

Said natural substances can be added to 6-benzyladenine alone or in any combination.

For instance, a formulation comprising 6-benzyladenine in association with leonardite, and/or one or more of its active substances, and with ethoxylated sorbitan monolaurate, and/or at least a surfactant and/or surfactant tackifier chosen among those described above, has proved particularly useful.

The preferred application is spraying in aqueous solution, carried out by means of current equipment normally used for applying plant protection products and/or plant hormones onto plants. Said application is executed one or more times on young fruitlets starting from few days after petal drop until fruits, which are still unripe, have stopped growing and have reached the size of ripe fruits.

Said composition shall preferably be in liquid form, although solid formulations are not at all excluded, such as for instance powders, granulates or pills or water-soluble tablets.

In case of liquid formulations, 6-benzyladenine and most components listed above will be present in solution; however, some of them that are less soluble in water (leonardite for instance) can be used in suspension.

Generally speaking, the formulations according to the invention are prepared by dissolving first a suitable amount of potassium hydroxide in water, preferably lukewarm water, so as to reach a basic pH for stabilizing 6-benzyladenine in time; then (if required by the formulation) ethoxylated lauryl sulfate or the desired surfactant and/or surfactant-tackifier is added; 6-benzyladenine is usually added as final component, keeping the solution under stirring. Leonardite, if required, can be added at any time.

Preferably, 6-benzyladenine is then prepared by solubilization in water, after adding strong bases, in concentrations of 10,000 to 500,000 ppm, preferably of 20,000 to 100,000 with respect to solution volume.

By mere way of non-limiting example, the following contains some possible examples of concentrated mother liquor, in which the weights of the single components are in grams per 100 grams of composition.
- Recipe A
   pure 6-benzyladenine 9.35 g;
   potassium hydroxide 5.0 g;
   water to 100 g.
- Recipe B
   pure 6-benzyladenine 2.0 g;
   monopropylene glycol 20.0 g;
   water to 100 g.
- Recipe C
   pure 6-benzyladenine 9.35 g;
   ethoxylated monolauryl sulfate 10.0 g;
   potassium hydroxide 5.0 g;
   water to 100 g.
- Recipe D
   pure 6-benzyladenine 9.35 g;
   nonyl phenol 4.0 g;
   chipped potassium hydroxide 4.25 g;
   leonardite 2.0 g;
   water to 100 g.

It should be kept in mind that the concentrations referred to by way of example in the previous recipes as well as those referred to as preferred for 6-benzyladenine refer to concentrated mother liquor.

More to the point, the low values contained in the table of the experimental tests above are due to the fact that said concentrated mother composition is not used as such but it is diluted before use in water of spraying machines, for instance at a dose of 100 ml per 100 liters of water.

Suppose for instance a formulation containing 100 g of 6-benzyladenine per liter of solution, corresponding to a concentration of about 100,000 ppm of 6-benzyladenine with respect to solution volume.

If 100 ml of this concentrated product are diluted in 100 liters of water before use, a dilution of 1,000 will be obtained. The final concentration of 6-benzyladenine will be therefore of 100 ppm.

As a consequence, one should be able to tell between the high concentration of the commercial product, sold in bottles or similar packages, and the final concentration sprayed onto plants by farmers, who always dilute the content of packages in water of spraying machines.

Referring to the examples of the present description, the concentration in the recipes corresponds to the commercial concentration of concentrated product (referred to as concentrated mother liquor).

Conversely, the concentration referred to in the previous tables concerning experimental effectiveness corresponds to the concentration actually used in practice after suitable dilution, i.e. to use concentrations.

As a consequence, the formulations according to the present invention basically refer to commercial concentrated mother liquors, before their dilution on the spot just before use.

Therefore, a main object of the present invention is the use of 6-benzyladenine for treating fruits of plants of the actinidia genus.

A second main object of the present invention is the use of 6-benzyladenine for promoting the increase of size and weight of actinidia fruits as well as for improving the qualitative properties of said fruits.

A third main object of the invention is the use of 6-benzyladenine for preparing compositions for treating fruits of plants of the actinidia genus for improving their quali-quantitative appearance.

As described above, one of the preferred formulations of the invention comprises for instance 6-benzyladenine in concentrations of 10,000 to 500,000 ppm, preferably of 20,000 to 100,000 with respect to solution volume.

As much preferred is a formulation of 6-benzyladenine, as described above, in association with one or more compounds of natural origin, or at least with a particularly low toxicity, which act as adjuvants and promoters of the activity of 6-benzyladenine.

Therefore, another preferred aspect of the present invention concerns compositions of 6-benzyladenine for improving the quali-quantitative appearance of fruits of plants of the actinidia genus.

Said compositions are characterized in that they comprise:
a) at least a compound chosen between leonardite and fulvic acids; and/or
b) at least a compound chosen between a surfactant and/or a surfactant-tackifier.

Preferred surfactant compounds of the compositions according to the invention are preferably chosen between: fatty amine ethoxylate and ethoxylated fatty acids.

Preferred surfactant-tackifying compounds of the compositions according to the invention are preferably chosen among:
- ethoxylated sorbitan monolaurate, ethoxylated sorbitan monooleate, ethoxylated alcohol, ethoxylated lauryl sulfate, polyethoxylated alkylaryl ether;
- phenols, such as nonyl phenol;
- amine salt of ethoxylated and phosphorylated polyaryl phenol;
- monopropylene glycol and the like;
- products based on pine essential oils, such as pinolene;
- products based on mineral oils obtained by oil fractioned distillation;
- products based on vegetable oils, such as olive oil, corn oil, cotton oil, soybean oil, grape seed oil, seed oil such as sunflower seed oil, peanut oil, azadiractin oil;
- edible oils and fats of animal origin;
- soy lecithin.

According to another preferred aspect of the present invention, said compositions can further be added with humic acid.

Preferably, said compounds prepared in combination with 6-benzyladenine are dosed in a weight ratio of 0.05 to 50 parts per part of 6-benzyladenine, preferably of 0.25 to 40 parts, more preferably of 0.5 to 30 parts.

By way of non-limiting example, a particularly preferred composition among said compositions comprises 6-benzyladenine prepared in association with leonardite and/or with fulvic acids.

Another one of the particularly preferred compositions comprises 6-benzyladenine prepared in association with ethoxylated sorbitan monolaurate or with ethoxylated sorbitan monooleate.

A third one of the particularly preferred compositions comprises 6-benzyladenine prepared in association with leonardite or with fulvic acid, and ethoxylated sorbitan monolaurate.

Another one of the preferred compositions comprises 6-benzyladenine prepared in association with the surfactant known as fatty amine ethoxylate.

Another one of the preferred compositions comprises 6-benzyladenine prepared in association with the surfactants known as ethoxylated fatty acids.

Another one of the preferred compositions comprises 6-benzyladenine prepared in association with a surfactant-tackifier based on pine essential oils, known as pinolene.

Another one of the preferred compositions comprises 6-benzyladenine prepared in association with a surfactant-tackifier based on mineral oils obtained by oil fractioned distillation.

Another one of the preferred compositions comprises 6-benzyladenine prepared in association with a surfactant-tackifier based on vegetable oils such as olive oil, corn oil, cotton oil, soybean oil, grape seed oil, seed oil such as sunflower seed oil, peanut oil, azadiractin oil and/or others.

Another one of the preferred compositions comprises 6-benzyladenine prepared in association with a surfactant-tackifier based on edible oils or fats of animal origin.

Another one of the preferred compositions comprises 6-benzyladenine prepared in association with a surfactant-tackifier based on soy lecithin.

Other particularly preferred compositions are those mentioned in the above description and in the following experimental examples.

As mentioned above, the concentrated formulations according to the invention are preferably prepared by adding under stirring to an aqueous solution, alkalized by addition of a base, the desired active compounds according to the invention, preferably in a weight ratio of 0.050 to 50 parts per part of 6-benzyladenine, more preferably of 0.25 to 40 parts, still more preferably of 0.5 to 30 parts.

Preferably, 6-benzyladenine is added as final components.

Anyhow, the sequence in which the single components are added is not binding and a skilled technical can choose the best addition method depending on the type of formulation to be obtained.

Preferably, the base is chosen among strong bases of alkali metals and/or alkali-earth metals.

The addition of active agents occurs preferably at a temperature close to room temperature, if necessary at a slightly higher temperature, for instance of 25 to 45°C.

Before use, i.e. before treating fruits of plants of the actinidia genus, the formulations according to the present invention are diluted with water up to a concentration of 6-benzyladenine of 10 to 500 ppm with respect to volume solution, preferably of 50 to 100 ppm.

The treatment of fruits of plants of the actinidia genus is preferably carried out by means of one or more treatments on fruitlets after flower petal drop and/or on unripe young fruits by spraying with a solution/suspension of one of the preferred compositions of the invention after suitable dilution.

Preferably, 1 to 4 treatments are carried out depending on needs, in the following sequence:
- the first treatment 1 to 2 weeks after flower petal drop with corresponding fruitlet formation;
- the second treatment 1 to 2 weeks after the first;
- the third treatment 1 to 2 weeks after the second;
- the fourth treatment 1 to two weeks after the third. 2 to 3 treatments are particularly preferred.

The following examples of preparation of particularly preferred compositions according to the invention are mentioned as further support of the invention, however without limiting or binding the latter.

### Example 1

The percentage ratios of the components of the formulations are to be considered as % by weight with respect to a total weight of 100 grams of final formulation.

In a reactor equipped with stirrer and heating and cooling means, a basic solution is prepared by dissolving under stirring at a temperature of about 35°C an amount of 90% potassium hydroxide, corresponding to 4.25% by weight of the final formulation, in an amount of water of 82.30% by weight.

The solution thus obtained is gradually added under constant stirring with an amount of ethoxylated lauryl sulfate corresponding to 4% by weight of the final formulation.

Eventually, still under stirring, an amount of 98% 6-benzyladenine corresponding to 9.45% by weight of the final formulation is added.

The resulting solution is cooled at room temperature under stirring, then it is packed so as to obtain the desired concentrated mother liquor.

### Examples 2-6

Following the procedure described in Example 1, the following concentrated formulations were prepared.

| **2)** | |
|---|---|
| 98% 6-benzyladenine | 9.45%; |
| polyethoxylated alkylaryl ether | 4.00%; |
| humic acids | 0.01%; |
| 90% potassium hydroxide | 4.25%; |
| water | 82.29%. |

| **3)** | |
|---|---|
| 98% 6-benzyladenine | 9.45%; |
| ethoxylated sorbitan monooleate | 4.00%; |
| 90% potassium hydroxide | 4.25%; |
| water | 82.30%. |

| **4)** | |
|---|---|
| 98% 6-benzyladenine | 9.45%; |
| ethoxylated sorbitan monooleate | 4.00%; |
| humic acids | 0.01%; |
| 90% potassium hydroxide | 4.25%; |
| water | 82.29%. |

| **5)** | |
|---|---|
| 98% 6-benzyladenine | 9.45%; |
| amine salt of ethoxylated and | |
| phosphorylated polyaryl phenol | 4.00%; |
| ethoxylated alcohol | 3.00%; |
| 90% potassium hydroxide | 6.25%; |
| water | 77.25%. |

| **6)** | |
|---|---|
| 98% 6-benzyladenine | 9.45%; |
| polyethoxylated alkylaryl ether | 4.00%; |
| 90% potassium hydroxide | 4.25%; |
| water | 82.30%. |

## Claims

1. Use of 6-benzyladenine for treating fruits of plants of the actinidia genus, for improving the quali-quantitative appearance of said fruits.

2. The use according to claim 1, in which 6-benzyladenine is prepared in aqueous solution, preferably in concentrations of 10,000 to 500,000, more preferably of 20,000 to 100,000 with respect to solution volume.

3. Use of 6-benzyladenine for preparing compositions for treating fruits of plants of the actinidia genus, for improving their quali-quantitative appearance.

4. A composition of 6-benzyladenine for improving the quali-quantitative appearance of fruits of plants of the actinidia genus, **characterized in that** it comprises:
a) at least a compound chosen between leonardite and fulvic acids; and/or
b) at least a compound chosen between a surfactant and/or a surfactant-tackifier.

5. The composition according to claim 4, further **characterized in that** it comprises humic acid.

6. The composition according to claims 4-5, in which:
- said surfactant compound is chosen between: fatty amine ethoxylate and ethoxylated fatty acids; and
- said surfactant-tackifying compound is chosen among:
- ethoxylated sorbitan monolaurate, ethoxylated sorbitan monooleate, ethoxylated alcohol, ethoxylated lauryl sulfate, polyethoxylated alkylaryl ether;
- phenols, such as nonyl phenol;
- amine salts of ethoxylated and phosphorylated polyaryl phenol;
- monopropylene glycol and the like;
- products based on pine essential oils, such as pinolene;
- products based on mineral oils obtained by oil fractioned distillation;
- products based on vegetable oils, such as olive oil, corn oil, cotton oil, soybean oil, grape seed oil, seed oil such as sunflower seed oil, peanut oil, azadiractin oil;
- edible oils and fats of animal origin;
- soy lecithin.

7. The composition according to any of the claims 4 to 6, in which said compounds prepared in combination with 6-benzyladenine are dosed in a weight ratio of 0.05 to 50 parts per part of 6-benzyladenine, preferably of 0.25 to 40 parts, more preferably of 0.5 to 30 parts.

8. The composition according to any of the claims 4 to 7, in which 6-benzyladenine is diluted before use in a concentration of 10 to 500 ppm by weight, preferably of 50 to 100 ppm.

9. Use of a composition according to one or more of the claims 4 to 8 for treating fruits of plants of the actinidia genus.

10. A method for improving the quali-quantitative appearance of fruits of plants of the actinidia genus, comprising the spraying of said plants with a composition based on 6-benzyladenine according to claim 8.

11. The method according to claim 10, in which said spraying is carried out by means of one or more treatments onto fruitlets after flower petal drop and/or onto unripe young fruits.
